# EUROPÄISCHE PATENTSCHRIFT

(11) **EP 2 675 948 B1**
(45) Veröffentlichungstag und Bekanntmachung des Hinweises auf die Patenterteilung: **14.06.2017**
(21) Anmeldenummer: 12702507.0
(22) Anmeldetag: 01.02.2012
(51) Int. Cl.: D21F 1/50, D21F 3/10

(54) **DICHTUNGSEINRICHTUNG**
SEALING DEVICE
DISPOSITIF D'ÉTANCHÉITÉ

(30) Priorität: 14.02.2011 DE 102011004055
(43) Veröffentlichungstag der Anmeldung: 25.12.2013
(73) Patentinhaber: Voith Patent GmbH, 89522 Heidenheim (DE)
(72) Erfinder: HONOLD, Jochen, 86825 Bad Wörishofen (DE)
(86) Internationale Anmeldenummer: PCT/EP2012/051682
(87) Internationale Veröffentlichungsnummer: WO 2012/110320

(56) Entgegenhaltungen:
- WO-A1-2007/003698
- US-A- 5 314 585
- US-A- 5 466 341

## Beschreibung

Die Erfindung betrifft eine Dichtungseinrichtung zur Abdichtung wenigstens einer an eine in einer Bewegungsrichtung bewegte Fläche angrenzenden Unterdruck- oder Überdruckzone in einer Papier-, Tissue- oder Kartonmaschine, mit wenigstens einem der bewegten Fläche gegenüberliegenden Dichtelement, das wenigstens einen Zuführkanal für ein Schmiermittel Ein derartiges Dichtelement weist die Merkmale des Oberbegriffs des Anspruchs 1 auf und ist beispielsweise aus der Patentschrift US 5 314 585 bekannt. Derartige Dichtungseinrichtungen finden in der Praxis sowohl in der Formerpartie als auch in der Pressenpartie und/oder der Trockenpartie einer jeweiligen Papiermaschine Verwendung, wo sie u.a. in Saugwalzen oder Blaswalzen eingesetzt sein können. So besitzen Saugwalzen in der Regel feststehende innere Saugkästen, die z. B. verstellbare Zonen mit wenigstens einem Druckniveau bilden, wobei die Abdichtung der Druck- oder Vakuumzonen in Sieblaufrichtung durch Dichtleisten erfolgt, die sich in der Regel zumindest im wesentlichen über die gesamte Walzenlänge erstrecken. Der Walzenmantel ist perforiert, so dass beispielsweise Wasser aus einem Sieb durch die Bohrungen im Mantel in die Saugzone abgeführt und anschließend aus der Walze herausgeleitet werden.

Zur Abdichtung des Vakuums bei besaugten Walzentypen in Sieblaufrichtung bzw. in Bewegungsrichtung der bewegten Fläche werden üblicherweise leistenförmige Dichtelemente (deshalb auch Dichtleisten genannt) mit einer durchgehenden Dichtfläche eingesetzt, die in Kontakt mit der Innenfläche des Walzenmantels, also der genannten bewegten Fläche steht. Das Dichtelement unterliegt hier einem relativ großen Verschleiß, der durch den Abrieb und die Temperaturentwicklung resultiert, so dass das Dichtelement in der Praxis ständig nachjustiert werden muss. Nach Abtrag der maximalen Verschleißschicht muss die Walze geöffnet und das Dichtelement ausgetauscht werden.

Um ein Dichtelement zu kühlen, aber auch zu schmieren, wird es häufig mit kühlem Schmiermittel über seine gesamte Länge beispielsweise mittels Spritzdüsen angespritzt. Allerdings besitzen beispielsweise Saugwalzen mindestens zwei Dichtelemente. Wobei nur die in Umlaufrichtung des Mantels gesehene erste Dichtleiste davon profitiert, denn in der Regel wird das Schmiermittel bereits hier vollständig abgerakelt, so dass es nicht bis zur zweiten Dichtleiste getragen wird. Zudem sind die Spritzdüsen anfällig gegenüber Verschmutzungen.

Um das Dichtelement zu kühlen, wurde in der DE 103 25 686 A1 vorgeschlagen, ein Dichtelement mit geschlossenen Leitungen zu versehen, durch die ein Kühlmittel strömt.

Um den Verschleiß geringer zu halten, ist aus der WO 2007003698 A1 bekannt, einen radialen Zuführkanal in das Dichtelement einzubringen, um ein Schmiermittel in den Bereich zwischen Mantelinnenfläche und Dichtelement bringen zu können. Ein Nachbau dieser Ausführung hat in einem Versuch gezeigt, dass sie zu einer ungleichmäßigen Abnutzung des Dichtelementes in CD-Richtung führt und somit nicht zielführend ist.

Aus der US 5,314,585 ist ein Dichtelement bekannt, bei dem die Abdichtung über einen Zylinder erfolgt, der in einer Rundstabnut drehend gelagert ist. Diese Lösung ist fertigungstechnisch aufwändig und teuer, und führt im Betrieb aufgrund der bewegten Teile einen erhöhten Wartungsaufwand.

Deshalb hat sich die vorliegende Erfindung die Aufgabe gestellt, die Abnutzung eines Dichtelements über seine gesamte Länge gleichmäßig deutlich zu verringern.

Dabei soll die erfindungsgemäße Dichteinrichtung vor allem auch einfach und kostengünstig zu fertigen sein.

Diese Aufgabe wird erfindungsgemäß gelöst, indem der wenigstens eine Zuführkanal in einem offenen Versorgungskanal endet, welcher eine erste Seitenwand, eine zweite Seitenwand und ein Bett aufweist, der zudem durch einen Ausschnitt aus dem Dichtelement gebildet und in Bewegungsrichtung der bewegten Fläche betrachtet zu Beginn des Dichtelements angeordnet ist.

Über einen derartigen Versorgungskanal kann die der bewegten Fläche anliegende Dichtfläche ständig und auf ganzer Dichtelementlänge mit Schmiermittel versorgt werden. Dadurch wird die Reibung vermindert und das Dichtelement gekühlt. Über wenigstens einen Zuführkanal wird der Versorgungskanal dabei versorgt. Je länger das Dichtelement ist, desto sinnvoller ist es, mehrere Zuführkanäle einzusetzen, um die Füllung des Versorgungskanals möglichst gleichmäßig über dessen gesamte Länge zu gestalten.

Auf diese Weise ist es sogar von Vorteil, dass sich der Versorgungskanal, abgesehen von eventuellen, im Vergleich zur Länge des Dichtelementes kurzen Unterbrechungen im Wesentlichen über die gesamte Unterdruck- oder Überdruckzone erstreckt. Hier ist im Wesentlichen die Erstreckungsrichtung senkrecht zur Bewegungsrichtung zu verstehen. Die genannten Unterbrechungen beschränken sich dabei auf die Enden des Versorgungskanals und auf mögliche Stabilisierungsstege.

Die folgenden Spezifizierungen beschreiben vorteilhafte Ausgestaltungen des Dichtelements. Dabei ist vorgesehen, nämlich erstens, dass es eine der bewegten Fläche zugewandte Dichtfläche und eine Seitenfläche besitzt, zweitens dass der Versorgungskanal, eine erste Seitenwand, eine zweite Seitenwand und ein Bett aufweist, in das der wenigstens eine Zuführkanal mündet und weiterhin dass die oberen

Kanten der Seitenwände des Versorgungskanals einmal nahe der Dichtfläche und einmal in einer Seitenfläche des Dichtelementes enden. Mit der Seitenfläche des Dichtelementes ist diejenige gemeint, die in Bewegungsrichtung der bewegten Fläche vorne liegt. Wenn also beispielsweise ein Saugkasten in einer Saugwalze durch zwei Dichtungen abgedichtet werden soll, so liegt in Bewegungsrichtung des gelochten Mantels der erste Versorgungskanal des ersten Dichtelementes außerhalb des Saugkastens, während der zweite Versorgungskanal in dem zweiten Dichtelement der Innenseite des Saugkastens zugewandt ist. Durch die Spezifizierung, wo die Kanten der Seitenwände des Versorgungskanals enden, ergibt sich ein Aufbau eines Versorgungskanals, der im Querschnitt sich etwa J-förmig bzw. parabelförmig mit einem abgeschnittenen Ast zeigt.

Es ist vorteilhaft, wenn die Kante der zweiten Seitenwand, die in der Seitenfläche endet, etwa 2 bis 6 mm von der bewegten Fläche entfernt ist. Dieser Abstand hat sich im Versuch als optimal herausgestellt, wenn die über die bewegte Fläche mitgeführte Luftgrenzschicht nach Überqueren der Kante das Schmiermittel aus dem Bett des Versorgungskanals an der ersten Seitenwand empor bis in den Kontaktbereich zwischen Dichtelement und bewegter Fläche saugt. Dazu nimmt die erste Seitenwand bevorzugt im Wesentlichen einen Winkel von 20 bis 70° zu einer Tangente an der Dichtfläche ein. Der Begriff "im Wesentlichen" deutet hier an, dass die Seitenwand auch gekrümmt sein kann.

Zur Realisierung eines gleichmäßig und einfach bereitzustellenden Nachschubs an Schmiermittel ist mit Vorteil darauf geachtet, dass das Dichtelement einen Verteilkanal für mehrere Zuführkanäle mit wenigstens einem Schmiermittelanschluss aufweist. Der Verteilkanal kann ohne

Probleme in das Dichtelement eingebracht und die Enden ggf. durch einen Stopfen abgedichtet werden.

Um vom Schmiermittelanschluss die einzelnen Zuführkanäle mit gleichem Schmiermitteldruck, oder gleicher Schmiermitteltemperatur versorgen zu können, hat der Verteilkanal bevorzugt eine zumindest teilweise konisch verlaufende Form. Die notwendige Konizität kann rechnerisch leicht ermittelt werden.

Von Vorteil ist auch, wenn das Schmiermittel im Wesentlichen Wasser ist. Der Begriff "im Wesentlichen" bezieht sich hier auf die eventuelle Möglichkeit, dass das Wasser mit Schmierstoff-Additiven versehen ist. Ansonsten stellt Wasser das preiswerteste und dennoch sehr wirkungsvolle Schmiermittel dar. Es kommt beispielsweise in einer Saugwalze auch zu keinen Konflikten aufgrund von Vermischungen, da der abgesaugte Stoff ebenfalls Wasser ist.

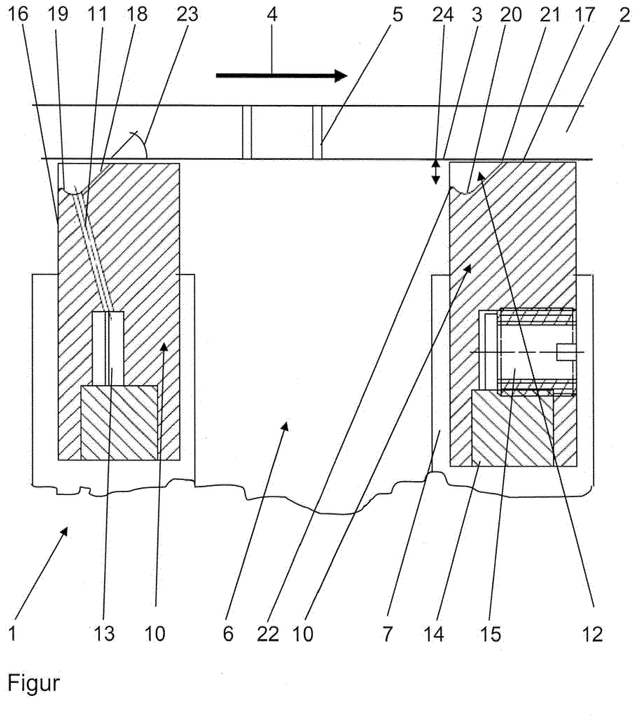

Die Erfindung wird im Folgenden anhand eines Ausführungsbeispiels unter Bezugnahme auf die Zeichnung näher erläutert.

Die einzige Figur zeigt in schematischer Teildarstellung eine rein beispielhafte Ausführungsform zweier Dichtelemente 10 einer Dichtungseinrichtung 1 in unterschiedlichen Schnittebenen, die beispielsweise innerhalb einer Saugwalze einer Papiermaschine angeordnet und mit der Innenwand 3 des Walzenmantels 2 zusammenwirken können. Über solche Dichtelemente 10 können beliebig viele Unterdruckzonen 6 unterschiedlichen Druckniveaus abgedichtet werden. Der Walzenmantel 2 ist mit Saugbohrungen 5 versehen, um beispielsweise Feuchtigkeit einer Bahn absaugen zu können.

Im vorliegenden Fall wirkt jedes Dichtelement 10 somit mit einer durch den Mantel 2 einer Saugwalze gebildeten, mit Saugbohrungen 5 versehenen bewegten Fläche 3, die der Mantelinnenfläche entspricht, zusammen. Die Bewegungsrichtung der Mantelinnenfläche 3 ist durch den Pfeil 4 definiert.

Das Dichtelement 10 ist in einer Aufnahme 7 gelagert. Diese Aufnahmen sind bekannt und können in nicht dargestellter Weise einen Kraftgeber umfassen, der das Dichtelement 10 mit einem definierten Druck gegen den Mantel anstellt.

Die dem Mantel angrenzende Fläche ist die Dichtfläche 17. Es hat sich herausgestellt, dass die optimale Ausdehnung der Dichtfläche 17 in Bewegungsrichtung 4 der bewegten Fläche 3 im Bereich von 10 bis 120 mm liegt, um eine wirkungsvolle Abdichtung gegenüber der Saug- oder Blaszone 6 zu erzielen. Außerdem sei die Fläche des Dichtelementes 10, die in etwa senkrecht zur Bewegungsrichtung 4 liegt und als erste von einem Punkt der Mantelinnenfläche 3 überquert wird, als Seitenfläche 16 definiert.

Über wenigstens einen Schmiermittelanschluss 15 wird ein in das Dichtelement 10 eingebrachter Verteilkanal 13 mit Schmiermittel versorgt, das in der Regel zum wesentlichen Teil aus Wasser besteht. Wasser als Schmierstoff zu verwenden ist jedoch nicht zwingend; es können durchaus andere Schmierstoffe Verwendung finden oder aber Wasser mit Schmieradditiven. Der Verteilkanal 13 ist ggf. durch einen Verschluss 14 abgedichtet und konisch ausgestaltet, um den Schmierstoff in gleicher Menge und gleichem Druck zu Zuführkanälen 11 zu bringen. Je nach Größe der Walze können hier 1 bis 50, vorzugsweise 20 bis 40

Zuführkanäle 11 notwendig sein. Diese Zuführkanäle 11 enden in einem Versorgungskanal 12, der konstant und gleichmäßig über seine gesamte Länge, welche sich in der Regel über die gesamte Saugzone 6 quer zur Bewegungsrichtung 4 erstreckt, versorgt werden muss.

Der Versorgungskanal 12 ist in besonderer Weise ausgebildet. Er ist durch Entfernen einer "Ecke" des Dichtelementes 10 und Einbringen einer Vertiefung gebildet. In Bewegungsrichtung 4 ist es die dem Mantel 2 zugewandte Ecke, die zuerst von einem Punkt der Mantelinnenfläche 3 erreicht wird. Der Versorgungskanal 12 ist offen und besitzt eine erste Seitenwand 18 und eine zweite Seitenwand 19. Diese erheben sich aus dem Bett 20, das durch wenigstens einen Zuführkanal 11 mit Schmierstoff versorgt wird.

Die Kante 21 der ersten Seitenwand 18 liegt dabei nahe der bzw. angrenzend an die Dichtfläche 17, während die Kante 22 der zweiten Seitenwand 19 in der Seitefläche 16 liegt, und zwar mit einem Abstand 24 (angedeutet als Doppelpfeil) von der Innenfläche des Walzenmantels 3 in Höhe von etwa 2 bis 6 mm.

Die mit der Mantelinnenfläche 3 mitgeführte Luftgrenzschicht ist im Betrieb in der Lage, Schmierstoff aus dem Bett 20 des Versorgungskanals 12 entlang der etwa unter 20 bis 70° angeordneten zweiten Seitenwand 19 anzusaugen und in den Bereich zwischen Dichtungsfläche 17 und Mantelinnenfläche 3 zu führen. Das sorgt für einen besonderen Verschleißschutz am Dichtungselement 10 und ebenso für dessen Kühlung.

### Bezugszeichenliste

- 1: Dichtungseinrichtung
- 2: Mantel
- 3: bewegte Fläche, Mantelinnenfläche
- 4: Bewegungsrichtung, Pfeil
- 5: Saugbohrung
- 6: Unterdruckzone
- 7: Aufnahme
- 10: Dichtelement
- 11: Zuführkanal
- 12: Versorgungskanal
- 13: Verteilkanal
- 14: Verschluss
- 15: Schmiermittelanschluss
- 16: Seitenfläche
- 17: Dichtfläche
- 18: erste Seitenwand
- 19: zweite Seitenwand
- 20: Bett
- 21: Kante der ersten Seitenwand
- 22: Kante der zweiten Seitenwand
- 23: Winkel
- 24: Abstand

## Patentansprüche

1. Dichtungseinrichtung zur Abdichtung wenigstens einer an eine in einer Bewegungsrichtung (4) bewegte Fläche (3) angrenzenden Unterdruck- oder Überdruckzone (6) in einer Papier-, Tissue- oder Kartonmaschine, mit wenigstens einem der bewegten Fläche (3) gegenüberliegenden Dichtelement (10), das wenigstens einen Zuführkanal (11) für ein Schmiermittel aufweist, **dadurch gekennzeichnet, dass** der wenigstens eine Zuführkanal (11) in einem offenen Versorgungskanal (12) endet, welcher eine erste Seitenwand (18), eine zweite Seitenwand (19) und ein Bett (20) aufweist, der zudem durch einen Ausschnitt aus dem Dichtelement (10) gebildet und in Bewegungsrichtung (4) der bewegten Fläche betrachtet zu Beginn des Dichtelementes (10) angeordnet ist

2. Dichtungseinrichtung gemäß Anspruch 1, **dadurch gekennzeichnet, dass** sich der Versorgungskanal (12), abgesehen von eventuellen, im Vergleich zur Länge des Dichtelementes (10) kurzen Unterbrechungen im Wesentlichen über die gesamte Unterdruck- oder Überdruckzone (6) erstreckt.

3. Dichtungseinrichtung gemäß einem der Ansprüche 1 oder 2, **dadurch gekennzeichnet, dass** das Dichtelement (10) eine der bewegten Fläche (3) zugewandte Dichtfläche (17) und eine Seitenfläche (16) besitzt.

4. Dichtungseinrichtung gemäß einem der Ansprüche 1 bis 3, **dadurch gekennzeichnet, dass** der wenigstens eine Zuführkanal (11) in das Bett (20) des Versorgungskanals (12) mündet.

5. Dichtungseinrichtung gemäß einem der Ansprüche 3 bis 4, **dadurch gekennzeichnet, dass** sich die obere Kante (21) der ersten Seitenwand (18) nahe der Dichtfläche (17) befindet.

6. Dichtungseinrichtung gemäß Anspruch 5, **dadurch gekennzeichnet, dass** die erste Seitenwand (18) im Wesentlichen einen Winkel (23) von 20 bis 70° zu einer Tangente an der Dichtfläche (17) einnimmt.

7. Dichtungseinrichtung gemäß einem der Ansprüche 3 bis 6, **dadurch gekennzeichnet, dass** sich die obere Kante (22) der zweiten Seitenwand (19) an der Seitenfläche (16) des Dichtelementes (10) mit einem Abstand (24) zur umlaufenden Fläche (3) befindet.

8. Dichtungseinrichtung gemäß Anspruch 7, **dadurch gekennzeichnet, dass** der Abstand (24) 2 bis 6 mm beträgt.

9. Dichtungseinrichtung gemäß einem der Ansprüche 1 bis 8, **dadurch gekennzeichnet, dass** das Dichtelement (10) einen Verteilkanal (13) für mehrere Zuführkanäle (11) mit wenigstens einem Schmiermittelanschluss (15) aufweist.

10. Dichtungseinrichtung gemäß Anspruch 8, **dadurch gekennzeichnet, dass** der Verteilkanal (13) eine zumindest teilweise konisch verlaufende Form hat.

11. Dichtungseinrichtung gemäß einem der Ansprüche 1 bis 10, **dadurch gekennzeichnet, dass** das Schmiermittel im Wesentlichen Wasser ist.

## Claims

1. Seal device for sealing at least one vacuum or positive pressure zone (6) which adjoins a surface (3) which is moved in a movement direction (4), in a paper, tissue or cardboard machine, having at least one sealing element (10) which lies opposite the moved surface (3) and has at least one feed channel (11) for a lubricant, **characterized in that** the at least one feed channel (11) ends in an open supply channel (12) which has a first side wall (18), a second side wall (19) and a bed (20), which supply channel (12) is additionally formed by way of a cut-out from the sealing element (10) and is arranged at the beginning of the sealing element (10) as viewed in the movement direction (4) of the moved surface.

2. Seal device according to Claim 1, **characterized in that**, apart from possible short interruptions in comparison with the length of the sealing element (10), the supply channel (12) extends substantially over the entire vacuum or positive pressure zone (6).

3. Seal device according to either of Claims 1 and 2, **characterized in that** the sealing element (10) has a sealing face (17), which faces the moved surface (3), and a side face (16).

4. Seal device according to one of Claims 1 to 3, **characterized in that** the at least one feed channel (11) opens into the bed (20) of the supply channel (12).

5. Seal device according to either of Claims 3 and 4, **characterized in that** the upper edge (21) of the first side wall (18) is situated close to the sealing face (17).

6. Seal device according to Claim 5, **characterized in that** the first side wall (18) assumes substantially an angle (23) of from 20 to 70° with respect to a tangent on the sealing face (17).

7. Seal device according to one of Claims 3 to 6, **characterized in that** the upper edge (22) of the second side wall (19) is situated on the side face (16) of the sealing element (10) at a spacing (24) from the circulating face (3).

8. Seal device according to Claim 7, **characterized in that** the spacing (24) is from 2 to 6 mm.

9. Seal device according to one of Claims 1 to 8, **characterized in that** the sealing element (10) has a distributing channel (13) for a plurality of feed channels (11) with at least one lubricant connector (15).

10. Seal device according to Claim 8, **characterized in that** the distributing channel (13) has an at least partially conically running shape.

11. Seal device according to one of Claims 1 to 10, **characterized in that** the lubricant is substantially water.

## Revendications

1. Dispositif d'étanchéité qui assure l'étanchéité d'au moins une zone (6) en dépression ou en surpression adjacente à une surface (3) se déplaçant dans une direction de déplacement (4) dans une machine à papier, à mouchoirs ou à carton,
le dispositif d'étanchéité présentant au moins un élément d'étanchéité (10) placé face à la surface (3) en déplacement et présentant un canal (11) amenant un agent lubrifiant,
**caractérisé en ce que**
le ou les canaux d'amenée (11) se terminent dans un canal d'alimentation (12) ouvert qui présente une première paroi latérale (18), une deuxième paroi latérale (19) et un lit (20), qui est de plus formé par une partie de l'élément d'étanchéité (10) et est disposé au début de l'élément d'étanchéité (10) dans la direction de déplacement (4) de la surface en déplacement.

2. Dispositif d'étanchéité selon la revendication 1, **caractérisé en ce que** le canal d'alimentation (12) s'étend essentiellement sur la totalité de la zone (6) en dépression ou en surpression, compte non tenu d'éventuelles interruptions courtes par rapport à la longueur de l'élément d'étanchéité (10).

3. Dispositif d'étanchéité selon l'une des revendications 1 ou 2, **caractérisé en ce que** l'élément d'étanchéité (10) possède une surface d'étanchéité (17) tournée vers la surface (3) en déplacement et une surface latérale (16).

4. Dispositif d'étanchéité selon l'une des revendications 1 à 3, **caractérisé en ce que** le ou les canaux d'amenée (11) débouchent dans le lit (20) du canal d'alimentation (12).

5. Dispositif d'étanchéité selon l'une des revendications 3 à 4, **caractérisé en ce que** le bord supérieur (21) de la première paroi latérale (18) est situé à proximité de la surface d'étanchéité (17).

6. Dispositif d'étanchéité selon la revendication 5, **caractérisé en ce que** la première paroi latérale (18) forme essentiellement un angle (23) de 20 à 70° par rapport à une tangente à la surface d'étanchéité (17).

7. Dispositif d'étanchéité selon l'une des revendications 3 à 6, **caractérisé en ce que** le bord supérieur (22) de la deuxième paroi latérale (19) est situé sur la surface latérale (16) de l'élément d'étanchéité (10) à une distance (24) par rapport à la surface périphérique (3).

8. Dispositif d'étanchéité selon la revendication 7, **caractérisé en ce que** la distance (24) est de 2 à 6 mm.

9. Dispositif d'étanchéité selon l'une des revendications 1 à 8, **caractérisé en ce que** l'élément d'étanchéité (10) présente un canal de répartition (13) pour plusieurs canaux d'amenée (11) présentant au moins un raccordement (15) d'agent lubrifiant.

10. Dispositif d'étanchéité selon la revendication 8, **caractérisé en ce que** le canal de répartition (13) a une forme au moins en partie conique.

11. Dispositif d'étanchéité selon l'une des revendications 1 à 10, **caractérisé en ce que** l'agent lubrifiant est essentiellement l'eau.
